# EUROPEAN PATENT APPLICATION

(11) **EP 1 468 924 A1**
(43) Date of publication of application: **20.10.2004**
(21) Application number: 04015518.6
(22) Date of filing: 08.07.1997
(51) Int. Cl.: B65C 3/16, B65C 9/22, B65C 9/20, B65C 9/25

(54) **Method and apparatus for applying labels with delayed adhesive activation**

(30) Priority: 12.07.1996 US 21701 P
(62) Divisional of application: 97934034.6
(71) Applicant: B & H MANUFACTURING COMPANY, INC., Ceres California 95307 (US)
(72) Inventor: Bright, Lyn E., Ceres, CA 95307 (US)
(74) Representative: HOFFMANN - EITLE

(57) **Abstract**

A method of labelling an article with a label having a full coat of adhesive, the method comprising:
providing the article to be labelled;
providing the label to be applied to the article, said label having a potentially adhesive surface;
adhering a first portion (40) of the label to the article;
wrapping the label around the article with the potentially adhesive surface in contact with the article;
adhering a second portion (42) of the label to the article at a location on the label spaced from the first portion of the label or to a surface of the label facing away from the article;
subsequent to the said steps of adhering the first and second portions providing full coat bonding by causing the potentially adhesive surface t adhere to the article.

## Description

### Technical Field

The present invention relates to labeling articles with labeling material that can be rendered adhesive subsequent to its application to the article.

### Background Art

Articles are labeled to identify the contents of containers and provide attractive point of sale product presentation. Labels are applied by roll-fed, sleeve, or cut and stack methods. Different labeling materials have been developed including paper labels, film labels, laminated film and paper labels, styrene foam, and laminated film and foam. The appearance of labeled containers can be improved by shrinking plastic label material to fit tightly around the container and even follow the contours of a container to provide an enlarged billboard appearance.

Generally, labels are either spot-adhered to articles or are applied as pressure sensitive labels. Pressure sensitive labels generally are completely coated with an adhesive material and are one of the most expensive labeling options. Labels are also applied to containers by adhesive applied immediately prior to labeling. The adhesive may be applied in a variety of patterns including leading and trailing edge, spaced dots, picture frame, or overall adhesive.

In some applications, the minimum amount of adhesive is desired, particularly if a container is to be recycled. The prior art has failed to provide an inexpensive and effective labeling process that minimizes the use of adhesives, solvents, or complex welding mechanisms.

Other applications are better suited to a fully adhered label for an article or container. Generally, the more adhesive that is applied to a label, the greater the likelihood that the label will develop wrinkles or surface distortions. Distortions can also be caused by heat shrinking label material over the top of adhesive spots.

One application where a completely adhesive surface is desirable is where a label is to be applied over a previously printed can. Such a process would make it possible to use cans that have an outmoded decoration. By fully adhering a label to an overlabeled container, removal of the label can be substantially prevented or impeded.

Another situation where a fully adhesive label is desirable is in the labeling of containers that undergo a pasteurization process. For example, in breweries, bottles are pasteurized after filling by placing them in hot water or steam which can cause labels to peel off the containers or create bubbles and wrinkles under the label.

Another situation wherein fully adherent labels would provide an advantage is in the use of thin stretchable labels. For example, inexpensive polyethylene or polypropylene labels can be produced that offer many excellent characteristics for labeling but are elastic and can stretch. If a thin film label could be made to adhere directly to the article or container, problems relating to label stretch after application to the container could be eliminated.

One prior art approach to providing a fully adhesive label for cans was proposed in Canadian Patent No. 1,012,906 to Germiat. The Germiat patent proposed using a coextruded label material wherein a extruded layer of surlyn was provided to act as an adhesive. Both the label material and can to be labeled were heated in the Germiat method while the label was being applied to cause the label to become adhesive and fully adhere to the container. Disadvantages associated with the Germiat label were that the adhesive did not always activate uniformly which could lead to wrinkles or bubbles forming between the container and label, especially after pasteurization.

In another unique labeling application, heat is used to shrink labels over the contours of containers as is disclosed in U.S. Patent No. 4,704,173 which issued to Hoffman. With shrink labeling, as proposed in the Hoffman patent, the leading and trailing edges of the label have hot melt adhesive applied thereto in a generally vertical line at the leading and trailing edges of the label. The balance of the label is preferably free of adhesive so that the label can shift as it shrinks without causing wrinkling of the label material. While the wrap shrink labeling process of the Hoffman patent is popular and effective for many labeling applications, the lack of a full coating of adhesive makes this approach inappropriate for some applications.

The above problems and limitations relating to the prior art are addressed by Applicant's invention as summarized below.

### Summary Of The Invention

The invention is defined in independent claims 1 and 16 below. The dependent claims are directed to optional or preferred features.

This invention provides a labeling method in which a label is placed in a desired position on an article and then subsequently affixed to the article through the activation of a potentially adhesive coating, layer or surface that is substantially not adhesive when the label is initially placed on the article.

According to one approach to practicing the present invention, a label is applied to the surface of the article by adhering a first portion of the label to the article and then wrapping the label around the article. A second portion of the label is adhered to either the article or the label. The label includes a potentially adhesive interface which is defined as a surface which does not adhere to the article but can slide or shift while the label is wrapped around the article. The potentially adhesive interface can be later caused to adhere to the article by subsequent processing steps.

According to this method, rapid roll-fed label application can be achieved with a rapid tack hot melt glue applied to the leading and trailing edges of the label. The potentially adhesive interface can be applied by co-extrusion with the label, printing an adhesive on the label, printing an ink on the label which can be made adhesive, or spraying a coating on the label. Alternatively, the potentially adhesive surface could actually be the polymer used to form the label or the container.

The potentially adhesive interface could also be a coating or surface of the article. A coating of the article could be later activated by subsequent heating, application of radiant energy, exposure to a chemical agent or by application of a mechanical force.

Another advantage of fully bonding a label to an article is that the label can function to support and reinforce glass bottles allowing for thinner bottle walls and less chance of container breakage. A fully adherent label can also be provided that extends to the cap area of a container and can provide a very effective tamper evident labeling mechanism.

According to another aspect of the present invention, the labeling film can be caused to shrink about the contours of the container. In the course of the shrinking step, particularly when heat is used to cause the labeling film to shrink, a heat activatable adhesive can be activated.

Other approaches to the invention may include the use of a solvent to form an adhesive in situ on the leading and trailing or other portions of the label to render material adhesive in localized areas. Spot application of radiation or heat could also be used to provide, for example, a leading and trailing edge adhesive portion of the label while leaving the portions of the label between leading and trailing edges substantially unactivated until after the label has been placed on the container.

While the above methods are directed to roll-fed and cut and stack labeling techniques, the present invention can also be practiced with sleeve applied labels. Briefly, sleeve applied labels can be provided with a potentially adhesive interface between the article to be labeled and the sleeve. The sleeve may then be positioned on the article and either locally affixed to the article by fingers which hold the label in place on the article by a localized application or activation of adhesive, or by other mechanical retention mechanisms. The label can then either be shrunk on to the article or adhered to the article by activating the potentially adhesive interface after the step of affixing the label on to the article.

According to the invention, a new label can be provided for containers when there is a need to change the labeling on the container due to an ingredient change or a mistake in the printing of containers such as cans that are directly lithographed. It may also be advantageous to be able to provide a new label for an article if government labeling regulations change. The present invention can be used in conjunction with any article. However, one particularly appropriate field is the labeling of containers of various types. Containers including plastic containers, glass containers, metal cans and paperboard containers are all widely used and can benefit from the advantages of the present invention.

These and other advantages and objects of the invention will become readily apparent upon review of the attached drawings in light of the detailed description of the drawings and the preferred embodiments of the invention that follow.

### BRIEF DESCRIPTION OF THE DRAWING

Figure 1 is a flow chart illustrating the steps of the labeling method of the present invention.
Figure 2 is a schematic plan view of a roll fed labeling line.
Figure 3 is a schematic perspective view of a sleeve applied labeling method.
Figure 4 is a schematic perspective view of a cut and stack labeling method.
Figure 5 is a plan view of a label having a leading and trailing edge adhesive pattern and a coating of a potentially adhesive material between leading and trailing edges.
Figure 6 is a schematic view showing a container with a label being applied thereto with a leading and trailing edge glue pattern and an intermediate potentially adhesive interface.
Figure 7 is a schematic view of a container which is being subjected to hot air for shrinking portions of the label around the contours of the container.
Figure 8 is a schematic view of a container to which hot air is directed to cause the potentially adhesive interface to be activated and fully adhered to the container.

### DETAILED DESCRIPTION OF THE INVENTION

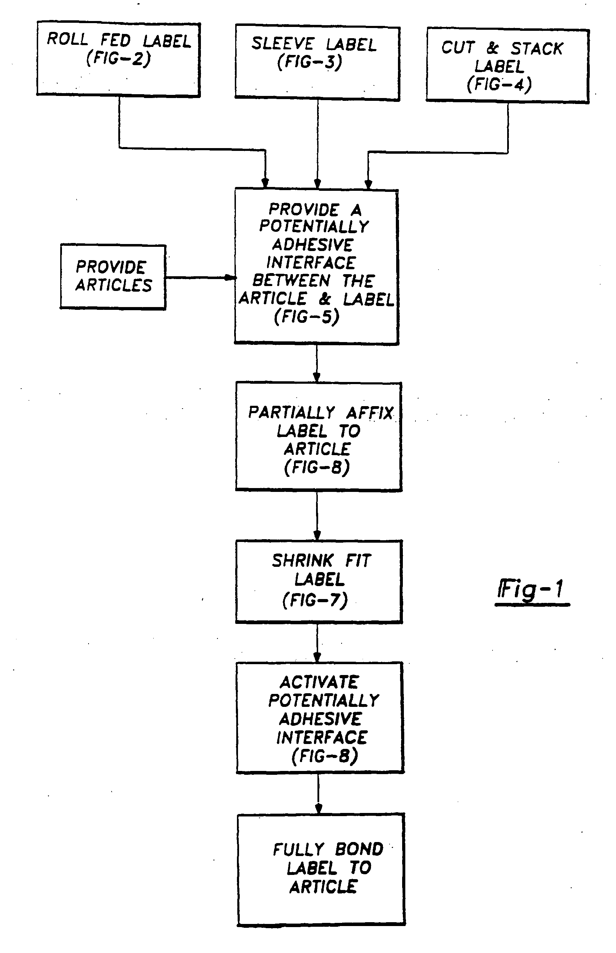

Referring now to figure 1, a flow chart showing various alternatives and an example of an arrangement of the steps of the invention are shown diagrammatically. Each of the figures of the drawing are referred to in the appropriate steps illustrated in figure 1.

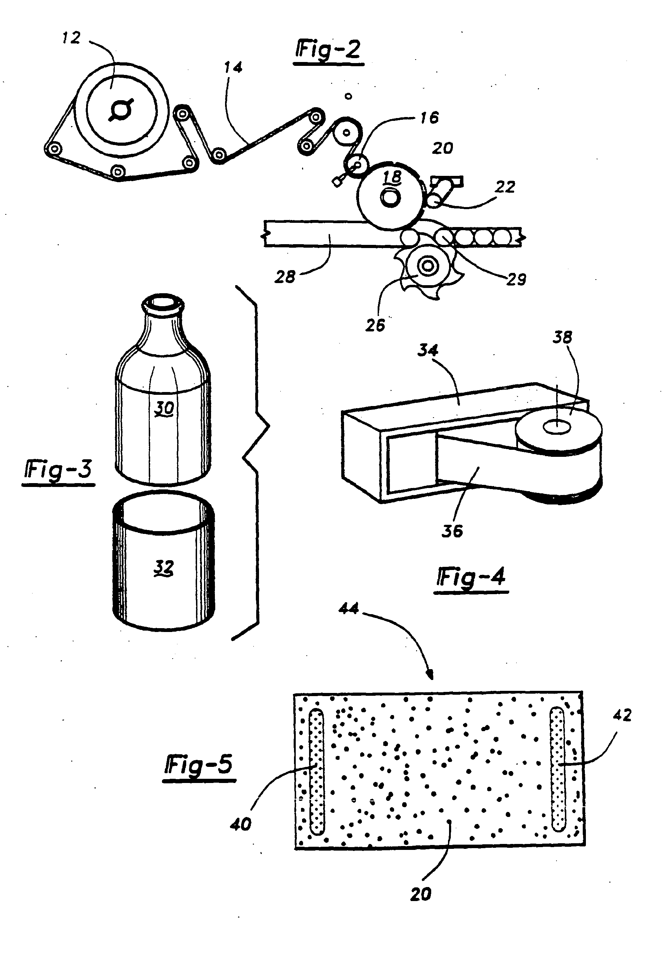

Referring to figures 1 through 4, the present invention is shown as being amenable to a wide variety of labeling techniques. Specifically illustrated are roll fed labeling, as shown in figure 2, sleeve applied labels, as shown in figure 3, and cut and stack labels, as shown in figure 4. With any of the labeling methods shown in figures 2 through 4, a label is provided for labeling an article such as a container.

Referring now to figure 2, a roll fed labeler 10 is shown diagrammatically wherein a roll 12 of label material is unwound with a web 14 of labeling material being fed to a label cutter 16. A vacuum drum 18 receives and supports individual labels 20 that are cut off by the cutter 16 from the web 14. The vacuum drum 18 supports the labels 20 as glue is applied by a glue applicator 22 prior to applying the label 20 to a container 24. Containers 24 are fed to the vacuum drum 18 in a sequential relationship by means of a star wheel 26 which picks up the containers 24 from a conveyor 28, feeds into the vacuum drum 13 and then deposits them after labeling on the conveyor 28.

A wide variety of labeling materials can be provided including paper labels, paper/polypropylene laminate labels, expanded styrofoam labels, film labels including polyethylene, polypropylene, and polystyrene films in combinations or laminations of such materials.

The labels can be cut by the cutter 16 into lengths sufficient to fully encircle a container 24 or provide only a spot label on the container 24. The glue applicator 22 can apply leading and trailing edge glue patterns, picture frame, spaced dots, lines of adhesive or a broad band knurled roll adhesive pattern.

According to the present invention, the glue applicator 22 would not provide a full pattern adhesive, but would leave substantial portions of the label 20 without application of any adhesive which is in an adhesive state prior to application of the label 20 to the container 24. The glue applicator 22 can be used to apply hot melt glue, cold glue or a solvent which can form an adhesive in situ when applied to a label 20. Alternatively, the glue applicator 22 could be another apparatus capable of forming an adhesive portion on a label 20. For example, a hot bar, hot air jet, radiation emitter or a water applicator could be provided that could be matched to a particular label or label coating to provide a localized adhesive which would enable a container 24 to pick up the label 20 and tack the label 20 to the container 24 as it is wrapped by the label 20.

Referring now co figure 3, the sleeve applied labeling method is illustrated by a bottle 30 disposed over a sleeve label 32 which is positioned to be slipped on to the bottle 30 from below. The disclosure of a sleeve applied labeling system as disclosed in U.S. Patent No. 3,822,459 is hereby incorporated by reference.

Referring now to figure 4, a cut and stack labeling magazine is shown wherein a label 36 is picked up by an object 38 from a label magazine 34.

Regardless of the label supply mechanism, a potentially adhesive interface is provided between the label and the article to be labeled. The potentially adhesive interface can comprise a printed adhesive material on the label, a layer of latent adhesive material which is co-extruded with the polymer label, a separate sheet made up of adhesive material, a coating provided on the article to be labeled or a surface of the polymer label material or article which can be rendered adhesive by a subsequent processing step.

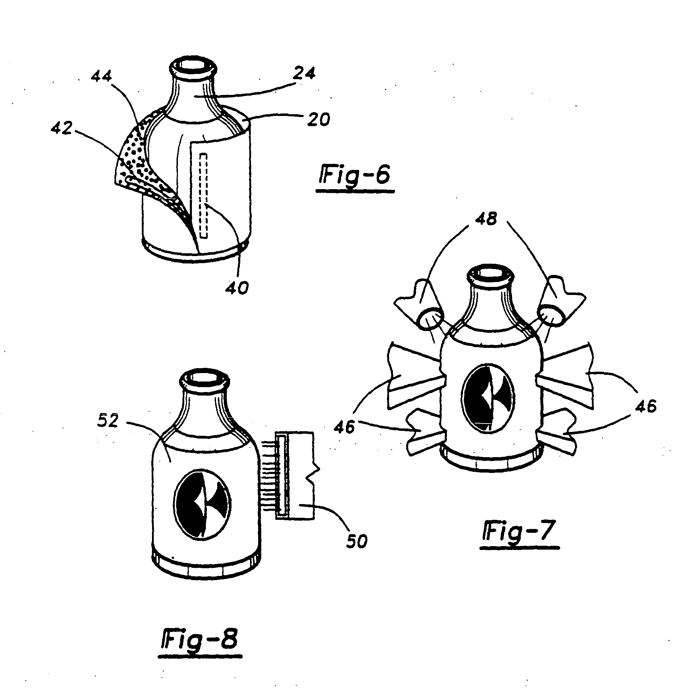

As shown in figure 5, a label segment 20 is shown which could be provided by the roll fed labeler of figure 2 or cut and stack labeler of figure 4. The label 20 includes a leading edge adhesive strip 40 and a trailing edge adhesive strip 42. The portions of the label 20 not covered by the leading and trailing edge adhesive strips 40 and 42 are coated with a latent adhesive coating 44 which can be provided as described above.

As shown in figure 6, the leading edge adhesive 40 is presented to the container 24 to provide a quick pick up as the container contacts the label segment 20. The container is rotated to cause the label to wrap around the container 24 until the trailing edge adhesive 42 overlaps and bonds to the outwardly facing portion of the label 20. As the label 20 is wrapped around the container 24, the label is permitted to shift and move freely without any interference from an active adhesive which could cause the label to begin to bond and result in wrinkles or other surface imperfections. While the latent adhesive coating 44 could have some minimal adhesive properties, the preferred coating would not stick to the container during the labeling process at least until the label is affixed to the container. The label could be directly affixed to the article by means of the trailing edge adhesive 42.

Alternatively, the label could be affixed by partially shrinking a sleeve 32 over the contours of a bottle 30 or other container such as a metal can. After the label is located and affixed to the article or container, the shrinking of the label over the contours can continue as shown in figure 7. Whether or not shrinking over the contours is required, the label can be permanently attached over its entire surface by activating the potentially adhesive interface as shown in figure 8.

Various mechanisms can be utilized to provide the delayed adhesive function of the present invention. The selection of the potentially adhesive interface will determine the activation mechanism. An example of a heat activated adhesive would be to spray Century CX887 or CelluCraft White Coat adhesives sold by Century Adhesives and CelluCraft respectively on the inner side of a polyethylene and polypropylene laminate film label. Other alternative activation mechanisms could include radiation which may take the form of a infrared or other light source, microwave radiation or other commercially available radiation source which can activate an adhesive or polymer to cause it to become adhesive. Other types of latent adhesives could be activated by application of water, application of chemical of fluids or gases or a time delayed adhesive which would become more adhesive over time. Another latent adhesive could be a micro encapsulated adhesive which could include micro capsules of, for example, epoxy components which when subjected to pressure or mechanical stresses would rupture and cause an epoxy bond to be formed between the article and the label.

While the invention, as described above, generally focuses on application of the potentially adhesive interface to the label, it is also possible that the potentially adhesive interface could be formed on the bottle or other article by spraying, dipping, or otherwise coating the article prior to labeling. If the potentially adhesive interface is formed on the container or article, it is maintained in a latent adhesive state prior to application of the label and only activated after the label is affixed in the desired orientation on the article or container.

While the potentially adhesive interface is generally anticipated to be an interface that would cover the entire area between the label and the bottle, it is also anticipated that a partial coverage of the area could be used. For example, if it would be desirable to provide a coupon on the label it would be preferable to avoid application of the latent adhesive material behind the coupon so that it can be readily separated form the article or container.

Referring now to figure 1, the last step is the provision of a fully bonded label on an article or container. By bonding the label to the article after it has assumed its final position on the article or container, it is believed that a consistent high quality label can be provided.

The following numbered paragraphs are part of the disclosure of the parent application WO98/02309, from which the present divisional application is taken.
1. A method of labeling articles comprising:
   providing an article to be labeled;
   providing a label to be applied to the article;
   providing a potentially adhesive interface between the article and the label;
   adhering a first portion of the label to the article;
   wrapping the label completely around the article with the potentially adhesive interface in contact with the article;
   adhering a second portion of the label to a surface of the label facing away from the article;
   causing the potentially adhesive interface to adhere to the article subsequent to the steps of adhering the first portion to the article and the second portion to the surface of the label facing away from the article.
2. The method of para. 1 wherein the potentially adhesive interface is a coating of activatable adhesive provided on the label and maintained in a substantially non-adhesive state to allow the portion of the label between the first and second portions of the label to shift on the article during the wrapping step.
3. The method of para. 2 wherein the potentially adhesive interface is a co-extruded layer of the label.
4. The method of para. 1 wherein the potentially adhesive interface is the label which is made of material that can be rendered adhesive but is maintained in a substantially non-adhesive state during the wrapping step to allow the portion of the label between the first and second portions of the label to shift on the article during the wrapping step.
5. The method of para. 4 wherein the label is selected from the group consisting essentially of polyethylene, polystyrene, and polypropylene.
6. The method of para. 1 wherein the step of causing the surface to adhere to the article is performed by heating a localized portion of the potentially adhesive interface of the label.
7. The method of para. 1 wherein the step of causing the surface to adhere to the article is performed by exposing the potentially adhesive interface of the label to radiant energy.
8. The method of para. 1 wherein the step of causing the surface to adhere to the article is performed by exposing the potentially adhesive interface of the label to a chemical agent which causes the interface to become adhesive.
9. The method of para. 1 wherein the coating is a microencapsulated adhesive and the step of causing the interface to adhere to the article is performed by applying a mechanical force to the potentially adhesive interface of the label to cause the interface to become adhesive.
10. The method of para. 1 wherein the label is heated to cause it to shrink to the contours of the article after the step of adhering the second portion to the article and before the step of causing the potentially adhesive interface to adhere to the article.
11. The method of para. 1 wherein the adhering steps include the application of hot melt glue to the leading and trailing ends of the label.
12. The method of para. 1 wherein the adhesive steps include application of a solvent to the labeling material to form an adhesive in situ.
13. The method of para. 12 wherein the solvent applied to the leading edge renders the leading edge adhesive during the wrapping step.
14. The method of para. 1 wherein the adhering steps include the activation of limited portions of the potentially adhesive interface to adhere the first and second portions of the label to the article.
15. The method of para. 1 wherein the potentially adhesive interface is formed by printing the adhesive onto one entire surface of the label.
16. The method of para. 1 wherein the potentially adhesive interface is formed by printing the adhesive in a pattern on the surface of the label.
17. A method of labeling articles comprising:
   providing an article to be labeled;
   providing a label to be applied to the article, said label having a potentially adhesive surface;
   adhering a first portion of the label to the article;
   wrapping the label around the article with the potentially adhesive surface in contact with the article;
   adhering a second portion of the label to the article at a location on the label spaced from the first portion of the label;
   causing the potentially adhesive surface to adhere to the article subsequent to the steps of adhering the first and second portions to the article.
18. A method of labeling articles comprising:
   providing an article to be labeled;
   providing a label to be applied to the article, said article having a potentially adhesive surface;
   adhering a first portion of the label to the article;
   wrapping the label around the article with the potentially adhesive surface in contact with the label;
   adhering a second portion of the label to the article at a location on the label spaced from the first portion of the label;
   causing the potentially adhesive surface to adhere to the label subsequent to the steps of adhering the first and second portions to the article.
19. A method of labeling articles comprising:
   providing an article to be labeled;
   providing a sleeve of labeling material;
   providing potentially adhesive interface between the article and the sleeve;
   positioning the sleeve on the article;
   affixing the sleeve to the article; and
   adhering the sleeve to the article by activating the potentially adhesive interface after the affixing step.
20. The method of para. 19 wherein the affixing step is performed at least in part by shrinking the label onto the article.

## Claims

1. A method of labelling an article with a label having a full coat of adhesive, the method comprising:
providing the article to be labelled;
providing the label to be applied to the article, said label having a potentially adhesive surface;
adhering a first portion (40) of the label to the article;
wrapping the label around the article with the potentially adhesive surface in contact with the article;
adhering a second portion (42) of the label to the article at a location on the label spaced from the first portion of the label or to a surface of the label facing away from the article;
subsequent to the said steps of adhering the first and second portions providing full coat bonding by causing the potentially adhesive surface t adhere to the article.

2. The method of claim 1, wherein the potentially adhesive surface comprises a coating of activatable adhesive which is maintained in a substantially non-adhesive state to allow the portion of the label between the first and second portions of the label to shift ton the article during the wrapping step.

3. The method of claim 2, wherein the potentially adhesive surface and the label is a co-extruded product.

4. The method of claim 1, wherein the potentially adhesive surface includes a coating which is made of material that can be rendered adhesive but is maintained in a substantially non-adhesive state between the first and second portions of the label during the wrapping step better to allow the portion of the label between its first and second spaced portions to shift on the article during the wrapping step.

5. The method of claim 4, wherein the label is selected from polyethylene, polystyrene, and polypropylene.

6. The method of any one of the preceding claims, wherein the step of causing the adherence of the potentially adhesive surface to the article is performed by heating the potentially adhesive surface of the label.

7. The method of any one of claims 1 to 5, wherein the step of causing the adherence of the potentially adhesive surface to the article is performed by exposing the potentially adhesive surface to radiant energy.

8. The method of any one of claims 1 to 5, wherein the step of causing the adherence of the potentially adhesive surface to the article is performed by exposing the potentially adhesive surface of the label to a chemical agent which causes the surface to become adhesive.

9. The method of any one of claims 1 to 5, wherein the potentially adhesive surface includes a micro-encapsulated adhesive and the step of causing the surface to adhere to the article is performed by applying a mechanical force to the potentially adhesive surface of the label to cause the surface to become adhesive.

10. The method of any one of the preceding claims, wherein the label is heated to cause the label to shrink to the contours of the article after the step of adhering the second portion to the article and before the step of causing the potentially adhesive interface to adhere to the article.

11. The method of an one of claims 1 to 5, wherein the step of adhering the first portion of the label to the article includes the steps of applying hot melt glue to the leading and trailing ends of the label.

12. The method of any one of claims 1 to 5, wherein the step of adhering the first portion of the label to the article includes the steps of applying a solvent to the labelling material to form an adhesive in situ.

13. The method of claim 12, wherein the applied solvent renders the leading edge adhesive during the wrapping step.

14. The method of any one of claims 1 to 5, wherein the step of adhering the first portion of the label to the article includes the step of activating the first and second portions of the potentially adhesive surface to render the first and second portions of the label adhesive.

15. The method of any one of claims 1 to 5, wherein the potentially adhesive surface is formed by printing a potentially adhesive material onto one entire surface of the label.

16. An apparatus for labelling articles with a full coat adhesive label, comprising:
a label supplier for providing a supply (12) of label material having a first latent adhesive applied to one side of the material;
a label cutter (16) for cutting the material provided by said label supplier into label segments having a predetermined length,
a vacuum drum (18) arranged to sequentially receive and hold each cut label segment;
a glue applicator (22) for applying a second non-latent adhesive to a portion of the same side of each label segment having the first latent adhesive applied thereon;
an article supplier (26) for transporting an article to be labelled to the vacuum drum, wherein said article supplier and said vacuum drum are arranged to wrap a label segment (20) around the article with the latent adhesive and non-latent adhesive in contact with the article; and
a latent adhesive activator (50) for activating the bonding of the latent adhesive to the article subsequent to adherence of the second non-latent adhesive to the article.

17. The apparatus of claim 16, wherein the label supplier supplies label material having a latent adhesive comprising a co-extruded layer of the label.

18. The apparatus of claim 16 or 17, wherein the label supplier supplies label material having a latent adhesive comprising a label which is made of material that can be rendered adhesive but is maintained in a substantially non-adhesive state during the wrapping step to allow a portion of the label to shift on the article during the wrapping step.

19. The apparatus of claim 18, wherein the label material is selected from polyethylene, polystyrene, and polypropylene.

20. The apparatus of any one of claims 16 to 19, wherein said latent adhesive activator activates the latent adhesive by heating a localized portion of the latent adhesive of the label.

21. The apparatus of any one of claims 16 to 20, wherein said latent adhesive activator activates the latent adhesive by exposing the latent adhesive on the label segment to radiant energy.

22. The apparatus of any one of claims 16 to 20, wherein said latent adhesive activator activates the latent adhesive by exposing the latent adhesive on the label segment to a chemical agent which causes the adhesive composition to become adhesive.

23. The apparatus of any one of claims 16 to 20, wherein the label supplier supplies label material having a latent adhesive comprising a coating of microencapsulated adhesive, and said latent adhesive activator activates the latent adhesive on the label segment to cause the adhesive composition to become adhesive.

24. The apparatus of any one of claims 16 to 23, further comprising a label heater arranged to heat a wrapped label segment to cause the label segment to shrink to the contours of the article after the adhering of the second non-latent adhesive to the article and before the activation of the latent adhesive.

25. The apparatus of any one of claims 16 to 24, wherein said glue applicator is arranged to apply hot melt glue to a leading and trailing end of each label segment.

26. The apparatus of any one of claims 16 to 24, wherein said glue applicator is arranged to apply a solvent to each label segment to form a non-latent adhesive in situ.

27. The apparatus of claim 26, wherein said glue applicator is arranged to apply the solvent to a leading edge of a label segment to render the leading edge adhesive during the wrapping of the segment around the article.

28. The apparatus of any one of claims It to 27, wherein the label supplier supplies label material having a latent adhesive comprising a coating which is applied to the entire surface area of the one side of the label material.

29. The apparatus of any one of claims 16 to 27, wherein the label supplier supplies label material having a latent adhesive comprising a coating which is applied in a pattern on the surface area of the one side of the label material.
